(19)

**Europäisches Patentamt**

**European Patent Office**

**Office européen des brevets**

(11) **EP 4 563 734 A1**

(12) **EUROPEAN PATENT APPLICATION**
published in accordance with Art. 153(4) EPC

(43) Date of publication:
**04.06.2025 Bulletin 2025/23**

(21) Application number: **23846385.5**

(22) Date of filing: **21.07.2023**

(51) International Patent Classification (IPC):
*D01F 6/18* (2006.01)          *C08F 20/44* (2006.01)
*D01F 9/22* (2006.01)

(52) Cooperative Patent Classification (CPC):
**C08F 20/44; D01F 6/18; D01F 9/22**

(86) International application number:
**PCT/JP2023/026719**

(87) International publication number:
**WO 2024/024654 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.07.2022   JP 2022121050
29.07.2022   JP 2022121051**

(71) Applicant: **Teijin Limited
Osaka 530-0005 (JP)**

(72) Inventors:
• **MOYORI, Takaya**
**Osaka-shi Osaka 530-0005 (JP)**
• **NAKANISHI, Takayuki**
**Osaka-shi Osaka 530-0005 (JP)**
• **YAMAGUCHI, Yorihisa**
**Osaka-shi Osaka 530-0005 (JP)**

(74) Representative: **Carpmaels & Ransford LLP
One Southampton Row
London WC1B 5HA (GB)**

(54) **PRODUCTION METHOD FOR CARBON FIBER PRECURSOR FIBERS**

(57)     An object of the invention is to provide a method for producing a carbon fiber precursor fiber with excellent quality and productivity by using a spinning dope that is excellent both in spinnability and drawability. The invention uses, as a spinning dope, an acrylonitrile-based polymer that is configured such that the area ratio (B/A) between a peak area A in the range where the polystyrene equivalent molecular weight measured by gel permeation chromatography (GPC) is 3,000,000 or more and less than 5,000,000 and a peak area B in the range where the polystyrene equivalent molecular weight measured by gel permeation chromatography (GPC) is 5,000,000 or more and 15,000,000 or less is 0.8 or more, and the area ratio (D/C) between a peak area C in the range where the polystyrene equivalent molecular weight measured by gel permeation chromatography (GPC) is less than 3,000,000 and a peak area D in the range where the polystyrene equivalent molecular weight measured by gel permeation chromatography (GPC) is 3,000,000 or more and 15,000,000 or less is 0.025 or less.

EP 4 563 734 A1

**Description**

Technical Field

The present invention relates to a method for producing a carbon fiber precursor fiber, and it more specifically relates to a method for producing a carbon fiber precursor fiber in which the molecular weight distribution of the acrylonitrile-based polymer, which constitutes the carbon fiber precursor fiber, is controlled as much as possible.

Background Art

Carbon fibers have excellent mechanical properties, particularly have high specific strength and specific modulus, and thus are widely used as a reinforcing material in the aerospace industry, the automotive industry, and the leisure goods industry. Then, because of the excellent mechanical properties, they can be expected to achieve weight reduction in aircraft and automobiles, etc., and thus are attracting attention as a means of reducing carbon dioxide emissions in the aircraft and automobile operation situations.

Carbon fibers are produced by subjecting fibers prepared from their precursor organic polymers to a flame retardant treatment in the presence of oxygen, followed by carbonization. Examples of precursors include cellulose, phenol resins, polyvinyl alcohol, vinylidene chloride, pitch, and polyacrylonitrile (hereinafter, sometimes simply referred to as PAN). Among them, carbon fibers obtained from PAN-based fibers are excellent in dynamic properties, such as specific strength and specific modulus, and can be produced with uniform and stable quality and performance. Thus, they are mass-produced industrially.

PAN-based fibers are commonly produced by a wet spinning method or a dry-wet spinning method. In either spinning method, a spinning dope prepared by dissolving the raw material acrylonitrile-based polymer in a solvent is commonly used. Then, in order to provide a carbon fiber with increased performance, it is effective to improve the quality and toughness of the carbon fiber precursor fiber, and it is particularly necessary to suppress single yarn spots and defects that may occur due to various treatments in the spinning step. In order to solve this problem, several techniques have been disclosed in the past.

For example, a technique in which the molecular weight distribution of the acrylonitrile-based polymer constituting a spinning dope is controlled to enhance the spinnability of the spinning dope, thereby improving production stability (PTL 1), a technique in which the molecular weight distribution of the acrylonitrile-based polymer constituting a carbon fiber precursor fiber is adjusted to improve the toughness of the carbon fiber precursor fiber, thereby improving drawability during carbonization (PTL 2), and the like have been proposed.

However, these conventional techniques have been problematic in the following respect. Because two kinds of acrylonitrile-based polymers having different weight average molecular weights, including an acrylonitrile-based polymer having a weight average molecular weight of 1,000,000 or more, which is considered an ultra-high molecular weight material, are allowed to coexist in order to control the acrylonitrile-based polymer molecular weight distribution, and also because an excessive amount of acrylonitrile-based polymer, which is an ultra-high molecular weight material, is contained in order to improve the spinnability of the spinning dope and the toughness of the carbon fiber precursor fiber, spinnability and drawability in the carbon fiber precursor fiber production are impaired, making it difficult for a carbon fiber precursor fiber to achieve both quality and productivity.

Citation List

Patent Literature

    PTL 1: JP2008-248219A
    PTL 2: WO2009-125832

Summary of Invention

Technical Problem

The invention has been accomplished in view of the above background, and an object thereof is to provide a method for producing a carbon fiber precursor fiber with excellent quality and productivity by using a spinning dope that is excellent both in spinnability and drawability.

Solution to Problem

The present inventors conducted extensive research to solve the above problem, and, as a result, found that in each of the above conventional techniques, when the content of the acrylonitrile-based polymer having a weight average molecular weight of 1,000,000 or more, which is considered an ultra-high molecular weight material, is skillfully controlled, an acrylonitrile-based polymer solution with controlled molecular weight distribution is obtained, and accordingly a carbon fiber precursor fiber with excellent quality and productivity can be obtained. The invention has thus been accomplished.

That is, the invention provides:

1. a method for producing a carbon fiber precursor fiber,
the method including using, as a spinning dope, an acrylonitrile-based polymer that is configured such that the area ratio (B/A) between a peak area A in the range where the polystyrene equivalent molecular weight measured by gel permeation chromatography (GPC) is 3,000,000 or more and less than 5,000,000 and a peak area B in the range where the polystyrene equivalent molecular weight measured by gel permeation chromatography (GPC) is 5,000,000 or more and 15,000,000 or less is 0.8 or more, and the area ratio (D/C) between a peak area C in the range where the polystyrene equivalent molecular weight measured by gel permeation chromatography (GPC) is less than 3,000,000 and a peak area D in the range where the polystyrene equivalent molecular weight measured by gel permeation chromatography (GPC) is 3,000,000 or more and 15,000,000 or less is 0.025 or less;
2. the method for producing a carbon fiber precursor fiber according to 1, in which the acrylonitrile-based polymer has a reduced viscosity of 1.0 to 2.5, and the acrylonitrile-based polymer concentration in the spinning dope is 18 wt% or more and 25 wt% or less; and
3. the method for producing a carbon fiber precursor fiber according to 1, in which the acrylonitrile-based polymer is an acrylonitrile-based polymer obtained by removing a polymerization inhibitor contained in acrylonitrile and polymerized by a solution polymerization method.

Advantageous Effects of Invention

According to the invention, as a result of using a spinning dope having excellent spinnability and excellent drawability, a carbon fiber precursor fiber with excellent quality can be provided.

Description of Embodiments

Hereinafter, the invention will be described in detail.

[Acrylonitrile-Based Polymer]

The acrylonitrile-based polymer used in the invention is characterized in that of the polystyrene equivalent molecular weights measured by gel permeation chromatography (GPC), the ratio (B/A) of a peak area B with a polystyrene equivalent molecular weight of 5,000,000 or more and 15,000,000 or less to a peak area A with a polystyrene equivalent molecular weight of 3,000,000 or more and less than 5,000,000 (hereinafter, this ratio is sometimes referred to as "ultra-high molecular weight component index") is 0.8 or more. In the case where the ultra-high molecular weight component index is less than 0.8, the effect of the ultra-high molecular weight component in improving the spinnability of the spinning dope is insufficient, and, in order to exhibit high spinnability, the acrylonitrile-based polymer needs to have an excess of an ultra-high molecular weight component, while the drawability decreases. Thus, the resulting carbon fiber precursor fiber has reduced quality, and, not only that, the carbon fiber obtained by carbonization has reduced quality and strength.

The ultra-high molecular weight component index value is preferably 1.00 or more, and more preferably 1.10 or more. When the ultra-high molecular weight component index value is 1.00 or more, excellent spinnability can be exhibited, and single fiber breakage during the coagulation step can be suppressed. In addition, in the case where the ultra-high molecular weight component index value is 1.10 or more, excellent spinnability can be exhibited, and thus the spinning speed can be improved.

Further, the acrylonitrile-based polymer used in the invention is characterized in that of the polystyrene equivalent molecular weights measured by gel permeation chromatography (GPC), the ratio (D/C) between a peak area C in the range of less than 3,000,000 and a peak area D in the range of 3,000,000 to 15,000,000 (hereinafter, this ratio is sometimes referred to as "ultra-high molecular weight ratio") is 0.025 or less. In the case where the ultra-high molecular weight ratio is more than 0.025, the amount of ultra-high molecular weight component becomes excessive, leading to a decrease in drawability. Thus, the resulting carbon fiber precursor fiber has reduced quality, and, not only that, the carbon fiber obtained by carbonization has reduced quality and strength.

The ultra-high molecular weight ratio value is preferably 0.020 or less. In the case where the ultra-high molecular weight ratio value is 0.020 or less, a carbon fiber precursor fiber with good drawability and improved quality can be obtained.

Incidentally, typical average molecular weights measured by gel permeation chromatography (GPC) include number average molecular weight (Mn), weight average molecular weight (Mw), z average molecular weight (Mz), and z+1 average molecular weight (Mz+1). Their values are sensitive to the influence of high molecular weight components; Mw is more sensitive than Mn, Mz is more sensitive than Mw, and Mz+1 is more sensitive than Mz. Therefore, by comparing (Mz+1)/Mw relative to Mw, the degree of the molecular weight of the ultra-high molecular weight component, or the amount of component, in the acrylonitrile-based polymer can be expressed.

In the acrylonitrile-based polymer used in the invention, it is preferable that the weight average molecular weight (Mw) and the z+1 average molecular weight (Mz+1) measured by gel permeation chromatography (GPC) satisfy either the following X or Y.

    X: Mw is 350,000 or more and less than 450,000, and (Mz+1)/Mw is 15 or more
    Y: Mw is 450,000 or more and less than 600,000, and (Mz+1)/Mw is 17 or more

In the case where the weight average molecular weight (Mw) is 350,000 or more and less than 450,000, and (Mz+1)/Mw is less than 15, the effect of the ultra-high molecular weight component in improving the spinnability of the spinning dope is insufficient, and, in order to exhibit high spinnability, the acrylonitrile-based polymer needs to have an excess of an ultra-high molecular weight component, while the drawability decreases. This may lead to problems in that the resulting carbon fiber precursor fiber has reduced quality, and, not only that, the carbon fiber obtained by carbonization has reduced quality and strength.

In addition, also in the case where the weight average molecular weight (Mw) is 450,000 or more and less than 600,000, and (Mz+1)/Mw is less than 17, similarly, the effect of the ultra-high molecular weight component in improving the spinnability of the spinning dope is insufficient, and, in order to exhibit high spinnability, the acrylonitrile-based polymer needs to have an excess of an ultra-high molecular weight component, while the drawability decreases. This may lead to problems in that the resulting carbon fiber precursor fiber has reduced quality, and, not only that, the carbon fiber obtained by carbonization has reduced quality and strength.

Incidentally, it is desirable to increase the weight average molecular weight because, as a result, the toughness of the carbon fiber precursor fiber improves. However, it is undesirable to increase the amount of ultra-high molecular weight component at this time because, as a result, spinnability is impaired. Therefore, in the case where the weight average molecular weight is set to 450,000 or more and less than 600,000, it is desirable to increase the molecular weight of the ultra-high molecular weight component and suppress the amount of component for the purpose of maintaining sufficiently high spinnability. Therefore, it is preferable that (Mz+1)/Mw is set to 17 or more.

In the case where the weight average molecular weight (Mw) is 350,000 or more and less than 450,000, the (Mz+1)/Mw value is preferably 15 or more and 30 or less, and a more preferred value is 15 or more and 25 or less.

In addition, in the case where the weight average molecular weight (Mw) is 450,000 or more and less than 600,000, the (Mz+1)/Mw value is preferably 17 or more and 30 or less, and a more preferred value is 17 or more and 25 or less. It is preferable that the weight average molecular weight (Mw) is 450,000 or more and 500,000 or less, and (Mz+1)/Mw is 30 or less, because, as a result, from the viewpoint of the viscosity characteristics of the spinning dope, industrial handling is facilitated. When (Mz+1)/Mw is 25 or less, excellent drawability can be provided.

The polymerization method for obtaining an acrylonitrile-based polymer used in the invention may be a known polymerization method such as a solution polymerization method, a suspension polymerization method, or an emulsion polymerization method, but a solution polymerization method is preferable.

In the case where solution polymerization is selected, a known acrylonitrile polymerization method such as radical polymerization or ionic polymerization can be selected, but radical polymerization is preferable from the viewpoint of productivity. At this time, for the purpose of controlling the molecular weight distribution of the acrylonitrile-based polymer, the concentrations of the initiator, the chain transfer agent, the solvent, and the like, as well as the timing of their addition, can be adjusted relative to the reaction rate of the monomer, acrylonitrile.

For example, by lowering the proportion of initiator relative to acrylonitrile or by reducing the reaction temperature, the weight average molecular weight of the prepared acrylonitrile-based polymer can be increased. In addition, by increasing the proportion of chain transfer agent relative to acrylonitrile, the weight average molecular weight of the acrylonitrile-based polymer can be lowered. Following these trends, by changing the reaction conditions while checking the shift in the reaction rate of acrylonitrile, an acrylonitrile-based polymer having a desired molecular weight distribution can be prepared.

The method for producing an acrylonitrile-based polymer in the invention is preferably such that an acrylonitrile-based polymer that is an ultra-high molecular weight material is first prepared, and then an initiator or a chain transfer agent is additionally added to the reaction mixture to allow unreacted acrylonitrile to react, thereby adjusting the molecular weight distribution. At this time, by increasing or decreasing the reaction time of the acrylonitrile-based polymer that is an ultra-high molecular weight material, the ultra-high molecular weight ratio can be increased or decreased. When the proportion of acrylonitrile relative to the solvent is increased, the molecular weight tends to increase. Therefore, in the preparation of an acrylonitrile-based polymer that is an ultra-high molecular weight material, it is possible that the ratio of solvent to acrylonitrile is lowered, and the solvent is added after preparing the ultra-high molecular weight material. In addition, when the polymerization inhibitor contained in acrylonitrile is excluded, the weight average molecular weight of the acrylonitrile-based polymer that is an ultra-high molecular weight material tends to increase. Therefore, it is possible that before acrylonitrile is subjected to the reaction, the polymerization inhibitor contained therein is excluded. As a method for excluding a polymerization inhibitor, a known method, in which it is once vaporized and recovered by condensation, for example, can be used. Incidentally, in this case, "exclusion" also encompasses the state where 5 ppm or less of a polymerization inhibitor is contained.

In addition, it is also possible that an acrylonitrile-based polymer that is an ultra-high molecular weight material is prepared by suspension polymerization or emulsion polymerization and dissolved in an acrylonitrile-based polymer solution obtained by solution polymerization. In the case where suspension polymerization or emulsion polymerization is selected, for the purpose of controlling the molecular weight distribution of the acrylonitrile-based polymer, preparation can be performed by dissolving two kinds of acrylonitrile-based polymers having different weight average molecular weights in a solvent. In this case, a known method can be selected as the dissolution method. From the viewpoint of obtaining a spinning dope in which the acrylonitrile-based polymer is uniformly dissolved, solution polymerization is preferable.

In the case where solution polymerization is selected, a known solvent that allows the molecular weight to sufficiently grow in a polymerization reaction using acrylonitrile as a monomer main component can be used. For example, an aqueous zinc chloride solution or dimethylsulfoxide can be used. In the case where a spinning dope is prepared by dissolving two kinds of acrylonitrile-based polymers having different weight average molecular weights in a solvent, a known solvent having good solubility for acrylonitrile-based polymers can be used. For example, an aqueous zinc chloride solution, dimethylacetamide, dimethylsulfoxide, dimethylformamide, or the like can be selected.

As the initiator for radical polymerization, a known initiator can be used. From the viewpoint of economy and reaction rate, azobisisobutyronitrile is preferable. From the viewpoint of controlling the molecular weight, a chain transfer agent may also be added. As the chain transfer agent, a known compound can be used. However, from the viewpoint of reaction controllability, thiol-based compounds such as 1-octanethiol (also known as octyl mercaptan) and 1-butanethiol are preferable. From the viewpoint of handling and economy, 1-octanethiol is more preferable.

An acrylonitrile-based polymer contains acrylonitrile as a main component and can be copolymerized with known monomers copolymerizable with acrylonitrile. Acrylonitrile is preferably 93 wt% or more, more preferably 95 wt% or more, and 99.5 wt% or less, and still more preferably 98 wt% or more and 99.5 wt% or less.

As known monomers copolymerizable with acrylonitrile, for example, acrylic acid, methacrylic acid, methyl methacrylate, ethyl methacrylate, acrylamide, itaconic acid, vinylsulfonic acid, and the like can be selected, and one or more of them can be selected. From the viewpoint of maintaining a sufficiently high carbonization rate during carbon fiber production and maintaining high production efficiency in the flame retardant treatment, it is preferable that at least one member selected from itaconic acid and methacrylic acid is contained. From the same viewpoint, the copolymerized monomer(s) is preferably less than 7 wt%, more preferably less than 5 wt%, and still more preferably less than 2 wt%.

The reduced viscosity of the acrylonitrile-based polymer is preferably 1.0 or more and 2.5 or less. It is still more preferably 1.3 or more and 2.3 or less. When the reduced viscosity is less than 1.0, the viscosity of the spinning dope may be too low, leading to reduced spinnability. In addition, in the case where the reduced viscosity is more than 2.5, the viscosity of the spinning dope may be too high, leading to reduced spinnability.


[Spinning Dope]


The spinning dope in the invention refers to a polymer solution to be used in a spinning step, which contains an acrylonitrile-based polymer and a solvent as main components, and known additives can be added thereto for the purpose of making various improvements. In particular, from the viewpoint of coagulation controllability, it is desirable to add a basic compound that neutralizes the acid component in the acrylonitrile polymer solution. As the basic compound, from the viewpoint of suppressing defects in the carbon fiber precursor fiber, a non-metallic compound is preferable, and ammonia is still more preferable.

The concentration of the acrylonitrile-based polymer in the spinning dope is preferably 18 wt% or more and 25 wt% or less, and still more preferably 19 wt% or more and 23 wt% or less. In the case where the concentration of the acrylonitrile-based polymer is less than 18 wt%, the spinnability decrease, and, not only that, it may be difficult to obtain a carbon fiber precursor fiber having a dense structure. In addition, in the case where the concentration of the acrylonitrile-based polymer is more than 25 wt%, the weight average molecular weight of the acrylonitrile-based polymer needs to be lowered in order to obtain good discharge stability, leading to reduced drawability, which may reduce the toughness of the carbon fiber precursor fiber.

[Spinning]

The spinning dope is passed through a filter medium to remove gel-like foreign matters and insoluble components by filtration, and then subjected to a spinning step. From the viewpoint of productivity and the performance of the resulting carbon fiber, it is preferable that the spinning dope is highly degassed or defoamed and is free of bubbles. Degassing or defoaming can be accelerated by pressurization or depressurization.

In the invention, the spinning dope is discharged into a coagulation bath and coagulated into a yarn. As the coagulation liquid in the coagulation bath, it is preferable to use an aqueous solution or alcohol solution having dissolved therein a solvent capable of dissolving an acrylonitrile-based polymer in water. As the solvent contained in the coagulation liquid, the above solvents for a spinning dope can be used, and it is preferable to use the same solvent as the solvent used as the solvent in the spinning solution. From the viewpoint of coagulation properties and spinning stability, the solvent concentration in the coagulation liquid is preferably 10 to 70 wt%, and still more preferably 15 to 40 wt%. The temperature of the coagulation liquid is preferably 0 to 60°C. The lower the temperature of the coagulation liquid, the easier it is to obtain a precursor fiber bundle and a carbon fiber bundle with high circularity.

The spinneret for extruding the spinning dope preferably has 1,000 to 100,000 spinning holes. The hole diameter of the spinning holes is preferably 0.02 to 0.5 mm. A hole diameter of 0.5 mm or less is preferable because, as a result, the discharged yarns are less likely to adhere to each other, making it easier to obtain a carbon fiber precursor fiber bundle with excellent homogeneity. A hole diameter of 0.02 mm or more is preferable because, as a result, the occurrence of spun yarn breakage can be suppressed, making it easier to maintain spinning stability. The temperature at which the spinning dope is discharged is preferably 25°C or more. When this temperature is set to less than 25°C, the spinning dope viscosity increases, and the discharge stability decreases.

The obtained yarn is, after being washed with water and oiled, subjected to a drying step. Washing with water is performed for the purpose of removing the solvent, and can be performed by a known method. Oiling is performed for the purpose of imparting cohesion to the yarn bundle, and can be performed by a known method using a known oil.

Before oiling, the yarn may be drawn in a bath. In this case, it is preferable to perform drawing in a single bath or multiple baths having a temperature adjusted to 30°C or more and 98°C or less. The draw ratio at that time is preferably 1 time or more and 5 times or less, and still more preferably 1.1 times or more and 4 times or less.

Drying is performed for the purposes of removing water remaining inside and outside the yarn after washing with water and oiling, softening the acrylonitrile-based polymer constituting the yarn, reducing voids inside each single yarn constituting the yarn, and improving the density of each single yarn, and can be performed by a known method.

The yarn is next subjected to a drawing step to become a carbon fiber precursor fiber. Drawing can be performed using a dry heat, pressurized steam, or the like known method. The draw ratio at that time is preferably 1.1 times or more and 7 times or less, and still more preferably 1.1 times or more and 6 times or less. After the drawing step, the yarn may be subjected to a heat treatment step. This heat treatment is performed for the purposes of controlling the crystal orientation of the carbon fiber precursor fiber and relieving the tension inside the yarn, and can be performed by a known method.

Examples

Hereinafter, the invention will be described in detail with reference to examples and comparative examples, but the scope of the invention is not limited to the following examples and comparative examples. In addition, the physical properties in the Examples were measured by the following methods.

(1) Molecular Weight

In the case of synthesizing an acrylonitrile-based polymer by solution polymerization, an acrylonitrile-based polymer completely precipitated with water from an acrylonitrile-based polymer solution after the completion of the polymerization reaction and dried was used as a specimen. Specifically, an acrylonitrile-based polymer was obtained through the following procedures.

10 g of an acrylonitrile-based polymer solution having a known acrylonitrile-based polymer concentration was weighed, and water was poured therein in an amount 50 times or more the amount of acrylonitrile-based polymer solution, followed by pulverization using a mixer so that the acrylonitrile-based polymer was completely precipitated. Next, the liquid was excluded by filtration, followed by drying in an electric dryer, thereby giving a specimen for GPC measurement. At this time, care was taken to prevent the acrylonitrile-based polymer from being deteriorated by heat or oxidation. For example, as a condition that does not cause deterioration, drying is performed by heating in a nitrogen atmosphere.

The obtained acrylonitrile-based polymer was dissolved in dimethylformamide to a concentration of 0.1 wt% to give a liquid specimen. At this time, dimethylformamide having lithium bromide added thereto at 10 mmol/L was used. In order to prevent the acrylonitrile-based polymer from being deteriorated during dissolution, the heating temperature was set to 60°C or less.

The GPC apparatus used was e2695 manufactured by Waters, and the differential refractive index detector used was 2414 manufactured by Waters. The columns used were TSKgel-α-M (two columns) manufactured by Tosoh and TSKgel-guard-column-α manufactured by Tosoh, and the column temperature was set to 70°C.

As polymer standards for calibration curve preparation, monodisperse polystyrenes (14 kinds with molecular weights of 6,870,000, 3,750,000, 2,630,000, 1,740,000, 991,000, 728,000, 508,000, 277,000, 118,000, 46,400, 18,000, 6,660, 3,090, and 1,300) were used. The liquid specimen was filtered through a membrane filter (hole diameter: 0.45 μm) before the measurement.

A molecular weight distribution curve was obtained from each obtained GPC curve, and the various average molecular weight values (Mw, Mz), the ultra-high molecular weight component index, and the ultra-high molecular weight ratio were calculated.

The ultra-high molecular weight component index was calculated based on the following formula using the peak area A in the polystyrene equivalent molecular weight range of 3,000,000 or more and less than 5,000,000 and the peak area B in the range of 5,000,000 or more and 15,000,000 or less calculated from the obtained molecular weight distribution curve. The ultra-high molecular weight ratio was calculated based on the following formula using the peak area C in the polystyrene equivalent molecular weight range of less than 3,000,000 and the peak area D in the range of 3,000,000 or more and 15,000,000 or less calculated from the obtained molecular weight distribution curve.

$$\text{Ultra-high molecular weight component index} = B/A$$

$$\text{Ultra-high molecular weight ratio} = D/C$$

(2) Reduced Viscosity (ηred)

In the case of synthesizing an acrylonitrile-based polymer by solution polymerization, an acrylonitrile-based polymer completely precipitated with water from an acrylonitrile-based polymer solution after the completion of the polymerization reaction and dried was used as a specimen. Specifically, an acrylonitrile-based polymer was obtained through the following procedures.

10 g of an acrylonitrile-based polymer solution having a known acrylonitrile-based polymer concentration was weighed, and water was poured therein in an amount 50 times or more the amount of acrylonitrile-based polymer solution, followed by pulverization using a mixer so that the acrylonitrile-based polymer was completely precipitated. Next, the liquid was excluded by filtration, followed by drying in an electric dryer, thereby giving a specimen for GPC measurement. At this time, care was taken to prevent the acrylonitrile-based polymer from being deteriorated by heat or oxidation.

The obtained acrylonitrile-based polymer was dissolved in dimethylformamide to a concentration of 0.5 g/100 mL to give a liquid specimen. In order to prevent the acrylonitrile-based polymer from being deteriorated during dissolution, the heating temperature was set to 60°C or less.

Using an Ubbelohde viscometer as the viscometer, after the liquid specimen was charged and retained in a water bath adjusted to 35°C for 30 minutes, the fall time between the marked lines was measured three times with an accuracy of 1/100 seconds, and the average value was recorded as t (seconds). Similarly, dimethylformamide with no acrylonitrile-based polymer dissolved was also subjected to the measurement, and the result was recorded as t0 (seconds). The reduced viscosity (ηred) was calculated based on the following formula.

$$\text{Reduced viscosity} = (t - t0)/(0.5 \times t0)$$

(3) Acrylonitrile-Based Polymer Concentration in Spinning Dope

10 g of an spinning dope was weighed, and water was poured therein in an amount 50 times or more the amount of spinning dope, followed by pulverization using a mixer so that the acrylonitrile-based polymer was completely precipitated. Next, the liquid was excluded by filtration, followed by drying in an electric dryer. At this time, care was taken to prevent the acrylonitrile-based polymer from being deteriorated by heat or oxidation. From the mass of the obtained acrylonitrile-based polymer and the mass of the spinning dope, the acrylonitrile-based polymer concentration was calculated.

(4) Maximum Spinning Draft

The spinning dope was passed through a filter with 5-μm openings and once discharged into the air (process length: 5 mm) at a temperature of 35°C using a spinneret having 3,000 holes and a hole diameter of 0.15 mm at a discharge speed of 1 m/min, and the coagulated yarn was wound up. In this case, the winding speed was gradually increased, and, from the ratio between the winding speed and the discharge speed at the time of yarn breakage, the maximum spinning draft was calculated.

(5) Amount of Fluff (Number of Fluff Detections per 1,000 m)

A laser sensor (ZX-LT005 manufactured by OMRON Corporation) was installed immediately before the precursor fiber winder, and a 10-mm-wide laser beam projected from the laser projector was applied to the running yarn passing between the projector and the receiver, and the variations in the received laser width were continuously measured. An amplifier unit (ZX-LDA11-N manufactured by OMRON Corporation) was installed such that when the variation in the laser width reaching the receiver exceeded a threshold value, it is counted as fluff, and the amount of fluff was measured using a fluff detector. The threshold was set to 0.03 mm. The unit of the amount of fluff was the number of fluff detections per 1,000 m of the precursor fiber (detection number/1,000 m). Incidentally, when the amount of fluff is not more than 7/1,000 m, the amount of fiber winding around the roller during the carbonization of the carbon fiber precursor fiber is reduced, and this provides a carbon fiber with excellent quality and thus is preferable.

(6) Amount of Polymerization Inhibitor Contained in Acrylonitrile

The amount of polymerization inhibitor contained in acrylonitrile was measured as follows. 5 ml of nitric acid was added to 10 ml of acrylonitrile and stir-mixed to give a measurement specimen. The measurement specimen was filled into a quartz cell, and the absorbance at a wavelength of 400 nm was measured using a spectrophotometer (U-3010 manufactured by Hitachi, Ltd.). Then, through the same procedure, a calibration curve was prepared using acrylonitrile having a known polymerization inhibitor concentration, and, from the calibration curve, the polymerization inhibitor concentration in the measurement specimen was calculated.

[Example 1]

Nitrogen was passed through a polymerization vessel equipped with a stirring blade, and 129 parts by weight of dimethyl sulfoxide, 100 parts by weight of acrylonitrile, and 1 part by weight of itaconic acid were charged, stir-mixed to uniformity, and heated to 65°C. In this case, acrylonitrile that had been once vaporized and recovered by condensation to remove the previously added polymerization inhibitor to 0 ppm was used. After 65°C was reached, 0.006 parts by weight of azobisisobutyronitrile was added to start a solution polymerization reaction. The temperature was controlled to be 65°C for 50 minutes after the start of the reaction. Subsequently, 210 parts by weight of dimethyl sulfoxide was added, and the temperature was set to 60°C. 0.4 parts by weight of azobisisobutyronitrile and 0.17 parts by weight of octyl mercaptan were added, and the temperature was controlled to a reaction temperature of 60°C and maintained for 4 hours. Subsequently, the temperature was raised at a rate of 10°C/hour for 2 hours. For the next 6 hours, the temperature was controlled to a reaction temperature of 80°C, thereby giving an acrylonitrile-based polymer solution. At this time, the acrylonitrile-based polymer had an ultra-high molecular weight component index of 1.45 and an ultra-high molecular weight ratio of 0.018. In addition, the reduced viscosity was 1.68.

The obtained acrylonitrile-based polymer solution was depressurized to distill off unreacted acrylonitrile. Next, ammonia gas was blown into the acrylonitrile-based polymer solution and mixed to uniformity, thereby giving a spinning dope. At this time, the acrylonitrile-based polymer concentration in the spinning dope was 20.9%.

The obtained spinning dope was transferred to a storage tank and continuously spun to obtain a carbon fiber precursor fiber. The spinning dope was passed through a filter with 5-μm openings, once discharged into the air using a nozzle having a hole diameter of 0.15 mm (process length: 5 mm), passed through the air, and then introduced into an aqueous dimethyl sulfoxide solution having a concentration of 35 wt% and a bath temperature of 3°C to obtain a coagulated yarn. At this time, the spinning draft was set to 12.

The coagulated yarn was washed with water to remove the solvent and drawn to twice its original length in hot water, and a silicone oil was applied, followed by drying using a heated roller with the temperature increased stepwise. Next, the yarn was drawn at a draw ratio of 2 times in pressurized water vapor. Next, a heat treatment was performed using a heat set roller, thereby giving a carbon fiber precursor fiber. The maximum spinning draft of this spinning dope was 100. The amount of fluff measured by a fluff detector after passing through the pressurized water vapor drawing apparatus was 7/1,000 m.

[Example 2]

Nitrogen was passed through a polymerization vessel equipped with a stirring blade, and 129 parts by weight of dimethyl sulfoxide, 100 parts by weight of acrylonitrile, and 1 part by weight of itaconic acid were charged, stir-mixed to uniformity, and heated to 65°C. In this case, acrylonitrile that had been once vaporized and recovered by condensation to remove the previously added polymerization inhibitor to 1 ppm was used. After 65°C was reached, 0.006 parts by weight of azobisisobutyronitrile was added to start a solution polymerization reaction. The temperature was controlled to be 65°C for 40 minutes after the start of the reaction. Subsequently, 200 parts by weight of dimethyl sulfoxide was added, and the temperature was set to 60°C. 0.4 parts by weight of azobisisobutyronitrile and 0.17 parts by weight of octyl mercaptan were added, and the temperature was controlled to a reaction temperature of 60°C and maintained for 4 hours. Subsequently, the temperature was raised at a rate of 10°C/hour for 2 hours. For the next 6 hours, the temperature was controlled to a reaction temperature of 80°C, thereby giving an acrylonitrile-based polymer solution. At this time, the acrylonitrile-based polymer had an ultra-high molecular weight component index of 1.20 and an ultra-high molecular weight ratio of 0.008. In addition, the reduced viscosity was 1.55.

The obtained acrylonitrile-based polymer solution was decompressed to distill off unreacted acrylonitrile. Next, ammonia gas was blown into the acrylonitrile-based polymer solution and mixed to uniformity, thereby giving a spinning dope. At this time, the acrylonitrile-based polymer concentration in the spinning dope was 21.5%.

The obtained spinning dope was transferred to a storage tank and continuously spun to obtain a carbon fiber precursor fiber. The spinning dope was passed through a filter with 5-$\mu$m openings, once discharged into the air using a nozzle having a hole diameter of 0.15 mm (process length: 5 mm), passed through the air, and then introduced into an aqueous dimethyl sulfoxide solution having a concentration of 35 wt% and a bath temperature of 3°C to obtain a coagulated yarn. At this time, the spinning draft was set to 12.

The coagulated yarn was washed with water to remove the solvent and drawn to twice its original length in hot water, and a silicone oil was applied, followed by drying using a heated roller with the temperature increased stepwise. Next, the yarn was drawn at a draw ratio of 2 times in pressurized water vapor. Next, a heat treatment was performed using a heat set roller, thereby giving a carbon fiber precursor fiber. The maximum spinning draft of this spinning dope was 100. The amount of fluff measured by a fluff detector after passing through the pressurized water vapor drawing apparatus was 7/1,000 m.

[Example 3]

Nitrogen was passed through a polymerization vessel equipped with a stirring blade, and 129 parts by weight of dimethyl sulfoxide, 100 parts by weight of acrylonitrile, and 1 part by weight of itaconic acid were charged, stir-mixed to uniformity, and heated to 60°C. In this case, acrylonitrile that had been once vaporized and recovered by condensation to remove the previously added polymerization inhibitor to 0 ppm was used. After 60°C was reached, 0.006 parts by weight of azobisisobutyronitrile was added to start a solution polymerization reaction. The temperature was controlled to be 60°C for 60 minutes after the start of the reaction. Subsequently, 210 parts by weight of dimethyl sulfoxide was added, and the temperature was set to 60°C. 0.4 parts by weight of azobisisobutyronitrile and 0.15 parts by weight of octyl mercaptan were added, and the temperature was controlled to a reaction temperature of 60°C and maintained for 4 hours. Subsequently, the temperature was raised at a rate of 10°C/hour for 2 hours. For the next 6 hours, the temperature was controlled to a reaction temperature of 80°C, thereby giving an acrylonitrile-based polymer solution. At this time, the acrylonitrile-based polymer had an ultra-high molecular weight component index of 1.55 and an ultra-high molecular weight ratio of 0.016. In addition, the reduced viscosity was 1.69.

The obtained acrylonitrile-based polymer solution was decompressed to distill off unreacted acrylonitrile. Next, ammonia gas was blown into the acrylonitrile-based polymer solution and mixed to uniformity, thereby giving a spinning dope. At this time, the acrylonitrile-based polymer concentration in the spinning dope was 20.8%.

The obtained spinning dope was transferred to a storage tank and continuously spun to obtain a carbon fiber precursor fiber. The spinning dope was passed through a filter with 5-$\mu$m openings, once discharged into the air (process length: 5 mm) using a nozzle having a hole diameter of 0.15 mm, passed through the air, and then introduced into an aqueous dimethyl sulfoxide solution having a concentration of 35 wt% and a bath temperature of 3°C to obtain a coagulated yarn. At this time, the spinning draft was set to 12.

The coagulated yarn was washed with water to remove the solvent and drawn to twice its original length in hot water, and a silicone oil was applied, followed by drying using a heated roller with the temperature increased stepwise. Next, the yarn was drawn at a draw ratio of 2 times in pressurized water vapor. Next, a heat treatment was performed using a heat set roller, thereby giving a carbon fiber precursor fiber. The maximum spinning draft of this spinning dope was 120. The amount of fluff measured by a fluff detector after passing through the pressurized water vapor drawing apparatus was 3/1,000 m.

[Example 4]

Nitrogen was passed through a polymerization vessel equipped with a stirring blade, and 129 parts by weight of dimethyl sulfoxide, 100 parts by weight of acrylonitrile, and 1 part by weight of itaconic acid were charged, stir-mixed to uniformity, and heated to 65°C. In this case, acrylonitrile that had been once vaporized and recovered by condensation to remove the previously added polymerization inhibitor to 0 ppm was used. After 65°C was reached, 0.006 parts by weight of azobisisobutyronitrile was added to start a solution polymerization reaction. The temperature was controlled to be 65°C for 50 minutes after the start of the reaction. Subsequently, 220 parts by weight of dimethyl sulfoxide was added, and the temperature was set to 60°C. 0.4 parts by weight of azobisisobutyronitrile and 0.15 parts by weight of octyl mercaptan were added, and the temperature was controlled to a reaction temperature of 60°C and maintained for 4 hours. Subsequently, the temperature was raised at a rate of 10°C/hour for 2 hours. For the next 6 hours, the temperature was controlled to a reaction temperature of 80°C, thereby giving an acrylonitrile-based polymer solution. At this time, the acrylonitrile-based polymer had an ultra-high molecular weight component index of 1.30 and an ultra-high molecular weight ratio of 0.016. In addition, the reduced viscosity was 1.75.

The obtained acrylonitrile-based polymer solution was decompressed to distill off unreacted acrylonitrile. Next, ammonia gas was blown into the acrylonitrile-based polymer solution and mixed to uniformity, thereby giving a spinning dope. At this time, the acrylonitrile-based polymer concentration in the spinning dope was 20.3%.

The obtained spinning dope was transferred to a storage tank and continuously spun to obtain a carbon fiber precursor fiber. The spinning dope was passed through a filter with 5-$\mu$m openings, once discharged into the air (process length: 5 mm) using a nozzle having a hole diameter of 0.15 mm, passed through the air, and then introduced into an aqueous dimethyl sulfoxide solution having a concentration of 35 wt% and a bath temperature of 3°C to obtain a coagulated yarn. At this time, the spinning draft was set to 12.

The coagulated yarn was washed with water to remove the solvent and drawn to twice its original length in hot water, and a silicone oil was applied, followed by drying using a heated roller with the temperature increased stepwise. Next, the yarn was drawn at a draw ratio of 2 times in pressurized water vapor. Next, a heat treatment was performed using a heat set roller, thereby giving a carbon fiber precursor fiber. The maximum spinning draft of this spinning dope was 120. The amount of fluff measured by a fluff detector after passing through the pressurized water vapor drawing apparatus was 3/1,000 m.

[Example 5]

Nitrogen was passed through a polymerization vessel equipped with a stirring blade, and 129 parts by weight of dimethyl sulfoxide, 100 parts by weight of acrylonitrile, and 1 part by weight of itaconic acid were charged, stir-mixed to uniformity, and heated to 65°C. In this case, acrylonitrile that had been once vaporized and recovered by condensation to remove the previously added polymerization inhibitor to 2 ppm was used. After 65°C was reached, 0.006 parts by weight of azobisisobutyronitrile was added to start a solution polymerization reaction. The temperature was controlled to be 65°C for 45 minutes after the start of the reaction. Subsequently, 230 parts by weight of dimethyl sulfoxide was added, and the temperature was set to 60°C. 0.4 parts by weight of azobisisobutyronitrile and 0.15 parts by weight of octyl mercaptan were added, and the temperature was controlled to a reaction temperature of 60°C and maintained for 4 hours. Subsequently, the temperature was raised at a rate of 10°C/hour for 2 hours. For the next 6 hours, the temperature was controlled to a reaction temperature of 80°C, thereby giving an acrylonitrile-based polymer solution. At this time, the acrylonitrile-based polymer had an ultra-high molecular weight component index of 1.29 and an ultra-high molecular weight ratio of 0.013. In addition, the reduced viscosity was 1.69.

The obtained acrylonitrile-based polymer solution was decompressed to distill off unreacted acrylonitrile. Next, ammonia gas was blown into the acrylonitrile-based polymer solution and mixed to uniformity, thereby giving a spinning dope. At this time, the acrylonitrile-based polymer concentration in the spinning dope was 20.0%.

The obtained spinning dope was transferred to a storage tank and continuously spun to obtain a carbon fiber precursor fiber. The spinning dope was passed through a filter with 5-$\mu$m openings, once discharged into the air (process length: 5 mm) using a nozzle having a hole diameter of 0.15 mm, passed through the air, and then introduced into an aqueous dimethyl sulfoxide solution having a concentration of 35 wt% and a bath temperature of 3°C to obtain a coagulated yarn. At this time, the spinning draft was set to 12.

The coagulated yarn was washed with water to remove the solvent and drawn to twice its original length in hot water, and a silicone oil was applied, followed by drying using a heated roller with the temperature increased stepwise. Next, the yarn was drawn at a draw ratio of 2 times in pressurized water vapor. Next, a heat treatment was performed using a heat set roller, thereby giving a carbon fiber precursor fiber. The maximum spinning draft of this spinning dope was 120. The amount of fluff measured by a fluff detector after passing through the pressurized water vapor drawing apparatus was 3/1,000 m.

[Example 6]

Nitrogen was passed through a polymerization vessel equipped with a stirring blade, and 262 parts by weight of dimethyl sulfoxide, 100 parts by weight of acrylonitrile, and 1 part by weight of itaconic acid were charged, stir-mixed to uniformity, and heated to 65°C. In this case, acrylonitrile that had been once vaporized and recovered by condensation to remove the previously added polymerization inhibitor to 5 ppm was used. After 65°C was reached, 0.015 parts by weight of azobisisobutyronitrile was added to start a solution polymerization reaction. The temperature was controlled to be 65°C for 50 minutes after the start of the reaction. Subsequently, 65 parts by weight of dimethyl sulfoxide was added, and the temperature was set to 60°C. 0.4 parts by weight of azobisisobutyronitrile and 0.15 parts by weight of octyl mercaptan were added, and the temperature was controlled to a reaction temperature of 60°C and maintained for 4 hours. Subsequently, the temperature was raised at a rate of 10°C/hour for 2 hours. For the next 6 hours, the temperature was controlled to a reaction temperature of 80°C, thereby giving an acrylonitrile-based polymer solution. At this time, the acrylonitrile-based polymer had an ultra-high molecular weight component index of 0.91 and an ultra-high molecular weight ratio of 0.021. In addition, the reduced viscosity was 1.82.

The obtained acrylonitrile-based polymer solution was decompressed to distill off unreacted acrylonitrile. Next, ammonia gas was blown into the acrylonitrile-based polymer solution and mixed to uniformity, thereby giving a spinning dope. At this time, the acrylonitrile-based polymer concentration in the spinning dope was 21.5%.

The obtained spinning dope was transferred to a storage tank and continuously spun to obtain a carbon fiber precursor fiber. The spinning dope was passed through a filter with 5-$\mu$m openings, once discharged into the air using a nozzle having a hole diameter of 0.15 mm (process length: 5 mm), passed through the air, and then introduced into an aqueous dimethyl sulfoxide solution having a concentration of 35 wt% and a bath temperature of 3°C to obtain a coagulated yarn. At this time, the spinning draft was set to 12.

The coagulated yarn was washed with water to remove the solvent and drawn to twice its original length in hot water, and a silicone oil was applied, followed by drying using a heated roller with the temperature increased stepwise. Next, the yarn was drawn to twice at a draw ratio in pressurized water vapor. Next, a heat treatment was performed using a heat set roller, thereby giving a carbon fiber precursor fiber. The maximum spinning draft of this spinning dope was 110. The amount of fluff measured by a fluff detector after passing through the pressurized water vapor drawing apparatus was 8/1,000 m.

[Comparative Example 1]

Nitrogen was passed through a polymerization vessel equipped with a stirring blade, and 262 parts by weight of dimethyl sulfoxide, 100 parts by weight of acrylonitrile, and 1 part by weight of itaconic acid were charged, stir-mixed to uniformity, and heated to 65°C. In this case, acrylonitrile that had been once vaporized and recovered by condensation to remove the previously added polymerization inhibitor to 0 ppm was used. After 65°C was reached, 0.022 parts by weight of azobisisobutyronitrile was added to start a solution polymerization reaction. The temperature was controlled to be 65°C for 70 minutes after the start of the reaction. Subsequently, 105 parts by weight of dimethyl sulfoxide was added, and the temperature was set to 60°C. 0.4 parts by weight of azobisisobutyronitrile and 0.15 parts by weight of octyl mercaptan were added, and the temperature was controlled to a reaction temperature of 60°C and maintained for 4 hours. Subsequently, the temperature was raised at a rate of 10°C/hour for 2 hours. For the next 6 hours, the temperature was controlled to a reaction temperature of 80°C, thereby giving an acrylonitrile-based polymer solution. At this time, the acrylonitrile-based polymer had an ultra-high molecular weight component index of 0.74 and an ultra-high molecular weight ratio of 0.034. In addition, the reduced viscosity was 2.00.

The obtained acrylonitrile-based polymer solution was decompressed to distill off unreacted acrylonitrile. Next, ammonia gas was blown into the acrylonitrile-based polymer solution and mixed to uniformity, thereby giving a spinning dope. At this time, the acrylonitrile-based polymer concentration in the spinning dope was 19.6%.

The obtained spinning dope was transferred to a storage tank and continuously spun to obtain a carbon fiber precursor fiber. The spinning dope was passed through a filter with 5-$\mu$m openings, once discharged into the air (process length: 5 mm) using a nozzle having a diameter of 0.15 mm, passed through the air, and then introduced into an aqueous dimethyl sulfoxide solution having a concentration of 35 wt% and a bath temperature of 3°C to obtain a coagulated yarn. At this time, the spinning draft was set to 12.

The coagulated yarn was washed with water to remove the solvent and drawn to twice its original length in hot water, and a silicone oil was applied, followed by drying using a heated roller with the temperature increased stepwise. Next, the yarn was drawn at a draw ratio of 2 times in pressurized water vapor. Next, a heat treatment was performed using a heat set roller, thereby giving a carbon fiber precursor fiber. The maximum spinning draft of this spinning dope was 70. The amount of fluff measured by a fluff detector after passing through the pressurized water vapor drawing apparatus was 15/1,000 m.

[Comparative Example 2]

Nitrogen was passed through a polymerization vessel equipped with a stirring blade, and 262 parts by weight of dimethyl sulfoxide, 100 parts by weight of acrylonitrile, and 1 part by weight of itaconic acid were charged, stir-mixed to uniformity, and heated to 65°C. In this case, acrylonitrile that had been once vaporized and recovered by condensation to remove the previously added polymerization inhibitor to 3 ppm was used. After 65°C was reached, 0.018 parts by weight of azobisisobutyronitrile was added to start a solution polymerization reaction. The temperature was controlled to be 65°C for 65 minutes after the start of the reaction. Subsequently, 90 parts by weight of dimethyl sulfoxide was added, and the temperature was set to 60°C. 0.4 parts by weight of azobisisobutyronitrile and 0.17 parts by weight of octyl mercaptan were added, and the temperature was controlled to a reaction temperature of 60°C and maintained for 4 hours. Subsequently, the temperature was raised at a rate of 10°C/hour for 2 hours. For the next 6 hours, the temperature was controlled to a reaction temperature of 80°C, thereby giving an acrylonitrile-based polymer solution. At this time, the acrylonitrile-based polymer had an ultra-high molecular weight component index of 0.74 and an ultra-high molecular weight ratio of 0.026. In addition, the reduced viscosity was 1.89.

The obtained acrylonitrile-based polymer solution was decompressed to distill off unreacted acrylonitrile. Next, ammonia gas was blown into the acrylonitrile-based polymer solution and mixed to uniformity, thereby giving a spinning dope. At this time, the acrylonitrile-based polymer concentration in the spinning dope was 20.3%.

The obtained spinning dope was transferred to a storage tank and continuously spun to obtain a carbon fiber precursor fiber. The spinning dope was passed through a filter with 5-$\mu$m openings, once discharged into the air (process length: 5 mm) using a nozzle having a diameter of 0.15 mm, passed through the air, and then introduced into an aqueous dimethyl sulfoxide solution having a concentration of 35 wt% and a bath temperature of 3°C to obtain a coagulated yarn. At this time, the spinning draft was set to 12.

The coagulated yarn was washed with water to remove the solvent and drawn to twice its original length in hot water, and a silicone oil was applied, followed by drying using a heated roller with the temperature increased stepwise. Next, the yarn was drawn at a draw ratio of 2 times in pressurized water vapor. Next, a heat treatment was performed using a heat set roller, thereby giving a carbon fiber precursor fiber. The maximum spinning draft of this spinning dope was 70. The amount of fluff measured by a fluff detector after passing through the pressurized water vapor drawing apparatus was 15/1,000 m.

[Comparative Example 3]

Nitrogen was passed through a polymerization vessel equipped with a stirring blade, and 262 parts by weight of dimethyl sulfoxide, 100 parts by weight of acrylonitrile, and 1 part by weight of itaconic acid were charged, stir-mixed to uniformity, and heated to 65°C. In this case, acrylonitrile that had been once vaporized and recovered by condensation to remove the previously added polymerization inhibitor to 0 ppm was used. After 65°C was reached, 0.018 parts by weight of azobisisobutyronitrile was added to start a solution polymerization reaction. The temperature was controlled to be 65°C for 55 minutes after the start of the reaction. Subsequently, 85 parts by weight of dimethyl sulfoxide was added, and the temperature was set to 60°C. 0.4 parts by weight of azobisisobutyronitrile and 0.19 parts by weight of octyl mercaptan were added, and the temperature was controlled to a reaction temperature of 60°C and maintained for 4 hours. Subsequently, the temperature was raised at a rate of 10°C/hour for 2 hours. For the next 6 hours, the temperature was controlled to a reaction temperature of 80°C, thereby giving an acrylonitrile-based polymer solution. At this time, the acrylonitrile-based polymer had an ultra-high molecular weight component index of 0.95 and an ultra-high molecular weight ratio of 0.027. In addition, the reduced viscosity was 1.84.

The obtained acrylonitrile-based polymer solution was decompressed to distill off unreacted acrylonitrile. Next, ammonia gas was blown into the acrylonitrile-based polymer solution and mixed to uniformity, thereby giving a spinning dope. At this time, the acrylonitrile-based polymer concentration in the spinning dope was 20.6%.

The obtained spinning dope was transferred to a storage tank and continuously spun to obtain a carbon fiber precursor fiber. The spinning dope was passed through a filter with 5-$\mu$m openings, once discharged into the air (process length: 5 mm) using a nozzle having a diameter of 0.15 mm, passed through the air, and then introduced into a 35 wt% aqueous dimethyl sulfoxide solution having a concentration of 35 wt% and a bath temperature of 3°C to obtain a coagulated yarn. At this time, the spinning draft was set to 12.

The coagulated yarn was washed with water to remove the solvent and drawn to twice its original length in hot water, and a silicone oil was applied, followed by drying using a heated roller with the temperature increased stepwise. Next, the yarn was drawn at a draw ratio of 2 times in pressurized water vapor. Next, a heat treatment was performed using a heat set roller, thereby giving a carbon fiber precursor fiber. The maximum spinning draft of this spinning dope was 70. The amount of fluff measured by a fluff detector after passing through the pressurized water vapor drawing apparatus was 15/1,000 m.

[Comparative Example 4]

Nitrogen was passed through a polymerization vessel equipped with a stirring blade, and 262 parts by weight of dimethyl sulfoxide, 100 parts by weight of acrylonitrile, and 1 part by weight of itaconic acid were charged, stir-mixed to uniformity, and heated to 65°C. In this case, acrylonitrile that had been once vaporized and recovered by condensation to remove the previously added polymerization inhibitor to 5 ppm was used. After 65°C was reached, 0.015 parts by weight of azobisisobutyronitrile was added to start a solution polymerization reaction. The temperature was controlled to be 65°C for 30 minutes after the start of the reaction. Subsequently, 80 parts by weight of dimethyl sulfoxide was added, and the temperature was set to 60°C. 0.4 parts by weight of azobisisobutyronitrile and 0.15 parts by weight of octyl mercaptan were added, and the temperature was controlled to a reaction temperature of 60°C and maintained for 4 hours. Subsequently, the temperature was raised at a rate of 10°C/hour for 2 hours. For the next 6 hours, the temperature was controlled to a reaction temperature of 80°C, thereby giving an acrylonitrile-based polymer solution. At this time, the acrylonitrile-based polymer had an ultra-high molecular weight component index of 0.59 and an ultra-high molecular weight ratio of 0.007. In addition, the reduced viscosity was 1.71.

The obtained acrylonitrile-based polymer solution was decompressed to distill off unreacted acrylonitrile. Next, ammonia gas was blown into the acrylonitrile-based polymer solution and mixed to uniformity, thereby giving a spinning dope. At this time, the acrylonitrile-based polymer concentration in the spinning dope was 20.7%.

The obtained spinning dope was transferred to a storage tank and continuously spun to obtain a carbon fiber precursor fiber. The spinning dope was passed through a filter with 5-$\mu$m openings, once discharged into the air using a nozzle having a diameter of 0.15 mm (process length: 5 mm), passed through the air, and then introduced into an aqueous dimethyl sulfoxide solution having a concentration of 35 wt% and a bath temperature of 3°C. However, yarn breakage occurred, making it impossible to obtain a coagulated yarn. At this time, the spinning draft was set to 12. The maximum spinning draft of this spinning dope was 10.

[Comparative Example 5]

Nitrogen was passed through a polymerization vessel equipped with a stirring blade, and 262 parts by weight of dimethyl sulfoxide, 100 parts by weight of acrylonitrile, and 1 part by weight of itaconic acid were charged, stir-mixed to uniformity, and heated to 65°C. In this case, acrylonitrile that had been once vaporized and recovered by condensation to remove the previously added polymerization inhibitor to 0 ppm was used. After 65°C was reached, 0.022 parts by weight of azobisisobutyronitrile was added to start a solution polymerization reaction. The temperature was controlled to be 65°C for 60 minutes after the start of the reaction. Subsequently, 70 parts by weight of dimethyl sulfoxide was added, and the temperature was set to 60°C. 0.4 parts by weight of azobisisobutyronitrile and 0.24 parts by weight of octyl mercaptan were added, and the temperature was controlled to a reaction temperature of 60°C and maintained for 4 hours. Subsequently, the temperature was raised at a rate of 10°C/hour for 2 hours. For the next 6 hours, the temperature was controlled to a reaction temperature of 80°C, thereby giving an acrylonitrile-based polymer solution. At this time, the acrylonitrile-based polymer had an ultra-high molecular weight component index of 0.79 and an ultra-high molecular weight ratio of 0.030. In addition, the reduced viscosity was 1.71.

The obtained acrylonitrile-based polymer solution was decompressed to distill off unreacted acrylonitrile. Next, ammonia gas was blown into the acrylonitrile-based polymer solution and mixed to uniformity, thereby giving a spinning dope. At this time, the acrylonitrile-based polymer concentration in the spinning dope was 21.2%.

The obtained spinning dope was transferred to a storage tank and continuously spun to obtain a carbon fiber precursor fiber. The spinning dope was passed through a filter with 5-um openings, once discharged into the air (process length: 5 mm) using a nozzle having a diameter of 0.15 mm, passed through the air, and then introduced into a 35 wt% aqueous dimethyl sulfoxide solution having a concentration of 35 wt% and a bath temperature of 3°C to obtain a coagulated yarn. At this time, the spinning draft was set to 12.

The coagulated yarn was washed with water to remove the solvent and drawn to twice its original length in hot water, and a silicone oil was applied, followed by drying using a heated roller with the temperature increased stepwise. Next, the yarn was drawn at a draw ratio of 2 times in pressurized water vapor. Next, a heat treatment was performed using a heat set roller, thereby giving a carbon fiber precursor fiber. The maximum spinning draft of this spinning dope was 120. The amount of fluff measured by a fluff detector after passing through the pressurized water vapor drawing apparatus was 15/1,000 m.

[Comparative Example 6]

Nitrogen was passed through a polymerization vessel equipped with a stirring blade, and 262 parts by weight of dimethyl sulfoxide, 100 parts by weight of acrylonitrile, and 1 part by weight of itaconic acid were charged, stir-mixed to uniformity, and heated to 65°C. In this case, acrylonitrile that had been once vaporized and recovered by condensation to remove the previously added polymerization inhibitor to 0 ppm was used. After 65°C was reached, 0.022 parts by weight of azobisisobutyronitrile was added to start a solution polymerization reaction. The temperature was controlled to be 65°C for 45 minutes after the start of the reaction. Subsequently, 90 parts by weight of dimethyl sulfoxide was added, and the temperature was set to 60°C. 0.4 parts by weight of azobisisobutyronitrile and 0.14 parts by weight of octyl mercaptan were added, and the temperature was controlled to a reaction temperature of 60°C and maintained for 4 hours. Subsequently, the temperature was raised at a rate of 10°C/hour for 2 hours. For the next 6 hours, the temperature was controlled to a reaction temperature of 80°C, thereby giving an acrylonitrile-based polymer solution. At this time, the acrylonitrile-based polymer had an ultra-high molecular weight component index of 0.68 and an ultra-high molecular weight ratio of 0.021. In addition, the reduced viscosity was 1.85.

The obtained acrylonitrile-based polymer solution was decompressed to distill off unreacted acrylonitrile. Next, ammonia gas was blown into the acrylonitrile-based polymer solution and mixed to uniformity, thereby giving a spinning dope. At this time, the acrylonitrile-based polymer concentration in the spinning dope was 20.4%.

The obtained spinning dope was transferred to a storage tank and continuously spun to obtain a carbon fiber precursor fiber. The spinning dope was passed through a filter with 5-$\mu$m openings, once discharged into the air (process length: 5 mm) using a nozzle having a diameter of 0.15 mm, passed through the air, and then introduced into an aqueous dimethyl sulfoxide solution having a concentration of 35 wt% and a bath temperature of 3°C. However, yarn breakage occurred, making it impossible to obtain a coagulated yarn. At this time, the spinning draft was set to 12. The maximum spinning draft of this spinning dope was 10.

[Example 7]

A carbon fiber precursor fiber was obtained in the same manner as in Example 1, except that the spinning draft was set to 4, the yarn was drawn to three times its original length in hot water, and drawing in pressurized water vapor was performed at a draw ratio of 4 times. The amount of fluff measured by a fluff detector after passing through the pressurized water vapor drawing apparatus was 3/1,000 m.

[Example 8]

A carbon fiber precursor fiber was obtained in the same manner as in Example 2, except that the spinning draft was set to 4, the yarn was drawn to three times its original length in hot water, and drawing in pressurized water vapor was performed at a draw ratio of 4 times. The amount of fluff measured by a fluff detector after passing through the pressurized water vapor drawing apparatus was 3/1,000 m.

[Example 9]

A carbon fiber precursor fiber was obtained in the same manner as in Example 3, except that the spinning draft was set to 4, the yarn was drawn to three times its original length in hot water, and drawing in pressurized water vapor was performed at a draw ratio of 4 times. The number of detections by a fluff detector after passing through the pressurized water vapor drawing apparatus was 3/1,000 m.

[Example 10]

A carbon fiber precursor fiber was obtained in the same manner as in Example 4, except that the spinning draft was set to 4, the yarn was drawn to three times its original length in hot water, and drawing in pressurized water vapor was performed at a draw ratio of 4 times. The amount of fluff measured by a fluff detector after passing through the pressurized water vapor drawing apparatus was 3/1,000 m.

[Example 11]

A carbon fiber precursor fiber was obtained in the same manner as in Example 5, except that the spinning draft was set to 4, the yarn was drawn to three times its original length in hot water, and drawing in pressurized water vapor was performed at a draw ratio of 4 times. The amount of fluff measured by a fluff detector after passing through the pressurized water vapor drawing apparatus was 3/1,000 m.

[Example 12]

A carbon fiber precursor fiber was obtained in the same manner as in Example 6, except that the spinning draft was set to 4, the yarn was drawn to three times its original length in hot water, and drawing in pressurized water vapor was performed at a draw ratio of 4 times. The amount of fluff measured by a fluff detector after passing through the pressurized water vapor drawing apparatus was 8/1,000 m.

[Comparative Example 7]

The same procedure as in Comparative Example 1 was performed, except that the spinning draft was set to 4, the yarn was drawn to three times its original length in hot water, and drawing in pressurized water vapor was performed at a draw ratio of 4 times. However, yarn breakage occurred during drawing in pressurized water vapor, making it impossible to obtain a carbon fiber precursor fiber.

[Comparative Example 8]

The same procedure as in Comparative Example 2 was performed, except that the spinning draft was set to 4, the yarn was drawn to three times its original length in hot water, and drawing in pressurized water vapor was performed at a draw ratio of 4 times. However, yarn breakage occurred during drawing in pressurized water vapor, making it impossible to obtain a carbon fiber precursor fiber.

[Comparative Example 9]

The same procedure as in Comparative Example 3 was performed, except that the spinning draft was set to 4, the yarn was drawn to three times its original length in hot water, and drawing in pressurized water vapor was performed at a draw ratio of 4 times. However, yarn breakage occurred during drawing in pressurized water vapor, making it impossible to obtain a carbon fiber precursor fiber.

[Comparative Example 10]

The same procedure as in Comparative Example 5 was performed, except that the spinning draft was set to 4, the yarn was drawn to three times its original length in hot water, and drawing in pressurized water vapor was performed at a draw ratio of 4 times. However, yarn breakage occurred during drawing in pressurized water vapor, making it impossible to obtain a carbon fiber precursor fiber.
The results of the above examples and comparative examples are shown in Tables 1 and 2.

[Table 1]

| | Ultra-High Molecular Weight Ratio (D/C) | Ultra-High Molecular Weight Component Index (B/A) | Mw $\times 10^4$ | Mz $\times 10^4$ | Mz+1 $\times 10^4$ | Mz/Mw | Mz+1/Mw | $\eta_{red}$ | Dope Concentration | Maximum Spinning Draft | Spinning Draft | Total Draw Ratio | Presence /Absence of Yarn Breakage | Amount of Fluff (detection number/1000 m) |
|---|---|---|---|---|---|---|---|---|---|---|---|---|---|---|
| Example 1 | 0.018 | 1.45 | 44 | 288 | 953 | 6.5 | 21.5 | 1.68 | 20.9 | 100 | 12 | 4 | Absent | 7 |
| Example 2 | 0.008 | 1.20 | 37 | 153 | 607 | 4.2 | 16.5 | 1.55 | 21.5 | 100 | 12 | 4 | Absent | 7 |
| Example 3 | 0.016 | 1.55 | 45 | 282 | 996 | 6.2 | 21.9 | 1.69 | 20.8 | 120 | 12 | 4 | Absent | 3 |
| Example 4 | 0.016 | 1.30 | 43 | 229 | 739 | 5.3 | 17.1 | 1.75 | 20.3 | 120 | 12 | 4 | Absent | 3 |
| Example 5 | 0.013 | 1.29 | 42 | 199 | 684 | 4.8 | 16.5 | 1.69 | 20.0 | 120 | 12 | 4 | Absent | 3 |
| Example 6 | 0.021 | 0.91 | 46 | 221 | 608 | 4.8 | 13.2 | 1.82 | 21.5 | 110 | 12 | 4 | Absent | 8 |
| Comparative Example 1 | 0.034 | 0.74 | 56 | 297 | 684 | 5.3 | 12.3 | 2.00 | 19.6 | 70 | 12 | 4 | Absent | 15 |
| Comparative Example 2 | 0.026 | 0.74 | 46 | 224 | 534 | 4.8 | 11.6 | 1.89 | 20.3 | 70 | 12 | 4 | Absent | 15 |
| Comparative Example 3 | 0.027 | 0.95 | 47 | 266 | 711 | 5.6 | 15.1 | 1.84 | 20.6 | 70 | 12 | 4 | Absent | 15 |
| Comparative Example 4 | 0.007 | 0.59 | 39 | 113 | 316 | 2.9 | 8.2 | 1.71 | 20.7 | 10 | 12 | 4 | Present | - |
| Comparative Example 5 | 0.030 | 0.79 | 45 | 268 | 629 | 6.0 | 14.1 | 1.71 | 21.2 | 120 | 12 | 4 | Absent | 15 |
| Comparative Example 6 | 0.021 | 0.68 | 47 | 197 | 513 | 4.2 | 10.8 | 1.85 | 20.4 | 10 | 12 | 4 | Absent | - |

[Table 2]

| | Ultra-High Molecular Weight Ratio (D/C) | Ultra-High Molecular Weight Component Index (B/A) | Mw × 10^4 | Mz × 10^4 | Mz+1 × 10^4 | Mz/Mw | Mz+1/Mw | $\eta_{red}$ | Dope Concentration | Maximum Spinning Draft | Spinning Draft | Total Draw Ratio | Presence /Absence of Yarn Breakage | Amount of Fluff (detection number/1000 m) |
|---|---|---|---|---|---|---|---|---|---|---|---|---|---|---|
| Example 7 | 0.018 | 1.45 | 44 | 288 | 953 | 6.5 | 21.5 | 1.68 | 20.9 | 100 | 4 | 12 | Absent | 3 |
| Example 8 | 0.008 | 1.2 | 37 | 153 | 607 | 4.2 | 16.5 | 1.55 | 21.5 | 100 | 4 | 12 | Absent | 3 |
| Example 9 | 0.016 | 1.55 | 45 | 282 | 996 | 6.2 | 21.9 | 1.69 | 20.8 | 120 | 4 | 12 | Absent | 3 |
| Example 10 | 0.016 | 1.30 | 43 | 229 | 739 | 5.3 | 17.1 | 1.75 | 20.3 | 120 | 4 | 12 | Absent | 3 |
| Example 11 | 0.013 | 1.29 | 42 | 199 | 684 | 4.8 | 16.5 | 1.69 | 20.0 | 120 | 4 | 12 | Absent | 3 |
| Example 12 | 0.021 | 0.91 | 46 | 221 | 608 | 4.8 | 13.2 | 1.82 | 21.5 | 110 | 4 | 12 | Absent | 8 |
| Comparative Example 7 | 0.034 | 0.74 | 56 | 297 | 684 | 5.3 | 12.3 | 2.00 | 19.6 | 70 | 4 | 12 | Present | - |
| Comparative Example 8 | 0.026 | 0.74 | 46 | 224 | 534 | 4.8 | 11.6 | 1.89 | 20.3 | 70 | 4 | 12 | Present | - |
| Comparative Example 9 | 0.027 | 0.95 | 47 | 266 | 711 | 5.6 | 15.1 | 1.84 | 20.6 | 70 | 4 | 12 | Present | - |
| Comparative Example 10 | 0.030 | 0.79 | 45 | 268 | 629 | 6.0 | 14.1 | 1.71 | 21.2 | 120 | 4 | 12 | Present | - |

Industrial Applicability

According to the invention, a spinning dope having excellent spinnability and excellent drawability can be obtained, and, as a result of using the spinning dope, a carbon fiber precursor fiber having excellent quality can be provided. Therefore, the invention is industrially highly applicable, and the industrial value thereof is extremely high.

**Claims**

1. A method for producing a carbon fiber precursor fiber,
   the method comprising using, as a spinning dope, an acrylonitrile-based polymer that is configured such that the area ratio (B/A) between a peak area A in the range where the polystyrene equivalent molecular weight measured by gel permeation chromatography (GPC) is 3,000,000 or more and less than 5,000,000 and a peak area B in the range where the polystyrene equivalent molecular weight measured by gel permeation chromatography (GPC) is 5,000,000 or more and 15,000,000 or less is 0.8 or more, and the area ratio (D/C) between a peak area C in the range where the polystyrene equivalent molecular weight measured by gel permeation chromatography (GPC) is less than 3,000,000 and a peak area D in the range where the polystyrene equivalent molecular weight measured by gel permeation chromatography (GPC) is 3,000,000 or more and 15,000,000 or less is 0.025 or less.

2. The method for producing a carbon fiber precursor fiber according to claim 1, wherein the acrylonitrile-based polymer has a reduced viscosity of 1.0 to 2.5, and the acrylonitrile-based polymer concentration in the spinning dope is 18 wt% or more and 25 wt% or less.

3. The method for producing a carbon fiber precursor fiber according to claim 1, wherein the acrylonitrile-based polymer is an acrylonitrile-based polymer obtained by removing a polymerization inhibitor contained in acrylonitrile and polymerized by a solution polymerization method.

# INTERNATIONAL SEARCH REPORT

| | International application No. |
|---|---|
| | **PCT/JP2023/026719** |

**A. CLASSIFICATION OF SUBJECT MATTER**

***D01F 6/18***(2006.01)i; ***C08F 20/44***(2006.01)i; ***D01F 9/22***(2006.01)i
FI:   D01F6/18 E; C08F20/44; D01F9/22

According to International Patent Classification (IPC) or to both national classification and IPC

**B. FIELDS SEARCHED**

Minimum documentation searched (classification system followed by classification symbols)

D01F1/00-6/96; D01F9/00-9/32; C08F20/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-248219 A (TORAY INDUSTRIES, INCORPORATED) 16 October 2008 (2008-10-16)<br>claims, paragraphs [0001], [0034], [0042], [0051], [0127]-[0200], fig. 9-14, tables 1-4 | 1-3 |
| A | WO 2009/125832 A1 (TORAY INDUSTRIES, INCORPORATED) 15 October 2009 (2009-10-15)<br>claims, paragraphs [0018], [0036], [0105]-[0127], examples, tables 1-3 | 1-3 |
| A | JP 2009-197153 A (TORAY INDUSTRIES, INCORPORATED) 03 September 2009 (2009-09-03)<br>claims, paragraphs [0027], [0068]-[0085], examples, table 1 | 1-3 |
| A | CN 102517671 A (DONGHUA UNIVERSITY) 27 June 2012 (2012-06-27)<br>claims, paragraphs [0001]-[0005], [0034]-[0054], examples | 1-3 |
| A | CN 105622836 A (CHINA PETROLEUM & CHEMICAL CORPORATION) 01 June 2016 (2016-06-01)<br>claims, paragraphs [0005], [0032], [0036]-[0064] | 1-3 |

☐ Further documents are listed in the continuation of Box C.    ☑ See patent family annex.

| | | |
|---|---|---|
| * | Special categories of cited documents: | "T"   later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"   document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"   document member of the same patent family |

| Date of the actual completion of the international search | Date of mailing of the international search report |
|---|---|
| **07 September 2023** | **26 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/026719**

| Patent document cited in search report | | | Publication date (day/month/year) | Patent family member(s) | | | Publication date (day/month/year) |
|---|---|---|---|---|---|---|---|
| JP | 2008-248219 | A | 16 October 2008 | US 2010/0003515 A1 claims, paragraphs [0001], [0033], [0041], [0050], [0125]-[0243], examples 9-14, tables 1-4 | | | |
| | | | | EP | 2080775 | A1 | |
| | | | | KR 10-2009-0068370 | | A | |
| | | | | CN | 101553511 | A | |
| | | | | EA | 200970384 | A1 | |
| | | | | CN | 102086538 | A | |
| | | | | EA | 201100259 | A1 | |
| | | | | TW | 200833716 | A | |
| | | | | BR | PI0715985 | A2 | |
| | | | | MX | 2009003991 | A | |
| | | | | PT | 2080775 | E | |
| WO | 2009/125832 | A1 | 15 October 2009 | US 2011/0038788 A1 claims, paragraphs [0028], [0046], [0118]-[0206], examples, tables 1-3 | | | |
| | | | | EP | 2264232 | A1 | |
| | | | | CA | 2711285 | A1 | |
| | | | | CN | 101932760 | A | |
| | | | | KR 10-2010-0131453 | | A | |
| | | | | EA | 201071185 | A1 | |
| | | | | BR | PI0905945 | A2 | |
| | | | | TW | 200951254 | A | |
| | | | | ES | 2405581 | T | |
| | | | | PT | 2264232 | E | |
| JP | 2009-197153 | A | 03 September 2009 | (Family: none) | | | |
| CN | 102517671 | A | 27 June 2012 | (Family: none) | | | |
| CN | 105622836 | A | 01 June 2016 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008248219 A
- WO 2009125832 A